(19) Europäisches Patentamt
European Patent Office
Office européen des brevets

(11) **EP 2 520 955 A1**

(12) **EUROPEAN PATENT APPLICATION**
published in accordance with Art. 153(4) EPC

(43) Date of publication:
**07.11.2012 Bulletin 2012/45**

(51) Int Cl.:
**G02B 5/08** (2006.01)　　**B32B 7/02** (2006.01)
**B32B 9/00** (2006.01)　　**B32B 15/04** (2006.01)
**B32B 17/06** (2006.01)

(21) Application number: **10824727.1**

(22) Date of filing: **03.09.2010**

(86) International application number:
**PCT/JP2010/065161**

(87) International publication number:
**WO 2011/048875 (28.04.2011 Gazette 2011/17)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **20.10.2009 JP 2009241388**

(71) Applicant: **Sigma Koki Co., Ltd
Saitama 350-1297 (JP)**

(72) Inventor: **AOSHIMA Toshiaki
Hidaka-shi
Saitama 350-1297 (JP)**

(74) Representative: **Müller-Boré & Partner
Patentanwälte
Grafinger Straße 2
81671 München (DE)**

(54) **PLATE-TYPE BROADBAND DEPOLARIZING BEAM SPLITTER**

(57)　A broadband non-polarizing plate beam splitter which can be used in a wide wavelength band, and which can achieve improved yield and lowered manufacturing costs with little dependence on angle of incidence and with a small number of films.

A beam splitter for splitting a beam by inputting a light beam, wherein both main surfaces of a flat plate-shaped transparent glass substrate are optically polished, and one main surface of the transparent glass substrate has provided thereon: a wavelength band expanding film; a metallic film provided on the wavelength band expanding film; and a non-polarizing film provided on the metallic film. The light beam is non-polarized by means of the non-polarizing film when said light beam is input to the beam splitter, and the desired transmittance and reflectance are achieved when the non-polarized light is input to the metallic film. Thus, in terms of the wavelengths of light transmitted by the metallic film, the band in which the beam splitter can be used is expanded by the wavelength band expanding film.

Fig.1

EP 2 520 955 A1

# EP 2 520 955 A1

## Description

### Technical Field

The present invention relates to a broadband non-polarizing plate beam splitter having no polarization characteristic, capable of reflecting lights over a wide wavelength range, and emitting a P-polarized light and a S-polarized light by the same split ratio when the lights are split by a specified split ratio (reflectance : transmittance).

### Background Art

A broadband non-polarizing beam splitter is used over a specific wavelength region wherein a P-polarization characteristic line and a S-polarization characteristic line are close to each other or contacted each other in a spectral characteristic graph, and a plate beam splitter (for example, see Non Patent Literature 1), and a cube beam splitter are generally provided at present. In the plate beam splitter, a multilayered dielectric film is formed on a surface of a transparent glass substrate, and in the cube beam splitter, a non-polarizing film formed of a metal film and a dielectric film is formed on slopes of two 45° rectangular prisms, with the slopes of both triangle prisms abutted on each other and bonded each other.

The plate beam splitter is designed to transmit the P-polarized light and reflect the S-polarized light. Further, the dielectric multilayered beam splitter has a film characteristic that light absorption by a film is not so great and light loss is extremely small, and also has a film characteristic that an influence of a temperature variation is extremely small. Patent Literature 1 describes such a plate beam splitter.

The cube beam splitter is used as a half mirror designed to split an incident light into a reflected light (R) and a transmitted light (T) with 1 : 1 ratio, regardless of a polarization condition of the incident light. More specifically, there is no variation in the split ratio of the reflected light and the transmitted light, although such a variation occurs in a conventional beam splitter by polarization components. Further, an incident surface and an exit surface are coated with an antireflection film (AR coat). Moreover, only a narrow wavelength region can be used, and the cube beam splitter is effective to only a single wavelength. In addition, the cube beam splitter has a structure that angular fluctuation does not occur in the incident light, and has characteristics that there is almost no deviation of a transmission path or generation of ghost, provided that the splitter is used under a proper incidence condition.

In addition, although a reflecting mirror relates to a art different from the beam splitter, the reflecting mirror is known in which a plurality of dielectric films are laminated and vapor-deposited on a silver vapor-deposited film, and a polarization ratio in an arbitrary angle of incidence is decreased by adjusting thickness of each layer (for example, see Patent Literature 2.)

Moreover, a reflecting mirror is also known in which a silver vapor-deposited film layer is divided into a plurality of range, and a protection vapor-deposited film layer having a different film characteristic is vapor-deposited on each of the divided range (for example, see Patent Literature 3.)

### Citation List

### Patent Literature

[Patent Literature 1] Japanese published unexamined application No. 63-8702
[Patent Literature 2] Japanese published unexamined application No. 9-43408
[Patent Literature 3] Japanese published unexamined application No. 5-297207

### Non Patent Literature

[Non Patent Literature 1] Author H. A. Macleod, Translator Shigetaro Ogura and others, Title of a book "Optical Thin Film", Issuer Nikkan Kogyo Shimbun, LTD., November 30, 1989 issue.

### Summary of Invention

### Technical Problem

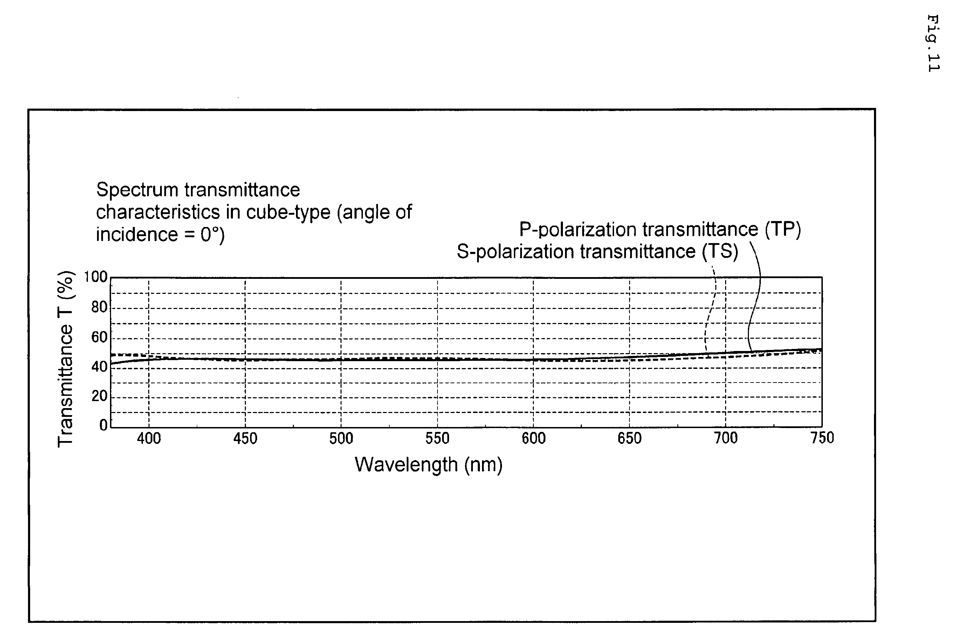

By the way, generally, in a non-polarizing cube beam splitter, a S-polarization characteristic line and a P-polarization characteristic line are close to each other in a wide range of about 400 nm to 700 nm, as shown in an example of transmittance characteristics in a case of angle of incidence = 0° (±3°) in Fig. 11, and therefore the non-polarizing cube beam splitter can be used as the non-polarizing beam splitter in the wide range. On the other hand, there is a problem that the beam splitter cannot respond to various angles of incidence.

This is because there is a distance between a surface of non-polarizing film on the slope of rectangular prism and the incident/exit surface on the rectangular prism, and in a case of an angle of incidence causing refraction, an optical axis deviates from a reflecting surface. Moreover, it is also one of the reasons that the beam splitter is easily influenced by polarization characteristics of the antireflection film set as opposed to the non-polarizing film across the transparent glass substrate.

Moreover, the non-polarizing cube beam splitter has many surfaces which should be coated. In addition, a bonding step is needed separately. Specifically, in the non-polarizing cube beam splitter, it is necessary to bond the rectangular prisms each other on which a plurality of films are separately formed.

There is a possibility to generate problems, such as breakage of the film or air bubble generation, in the bonding step. And this possibility increases in proportion to increasing the number of the films.

As a result, there are also problems that a percent defective increases and a yield deteriorates, and further a cost increases due to complexity of manufacturing steps, in the non-polarizing cube beam splitter.

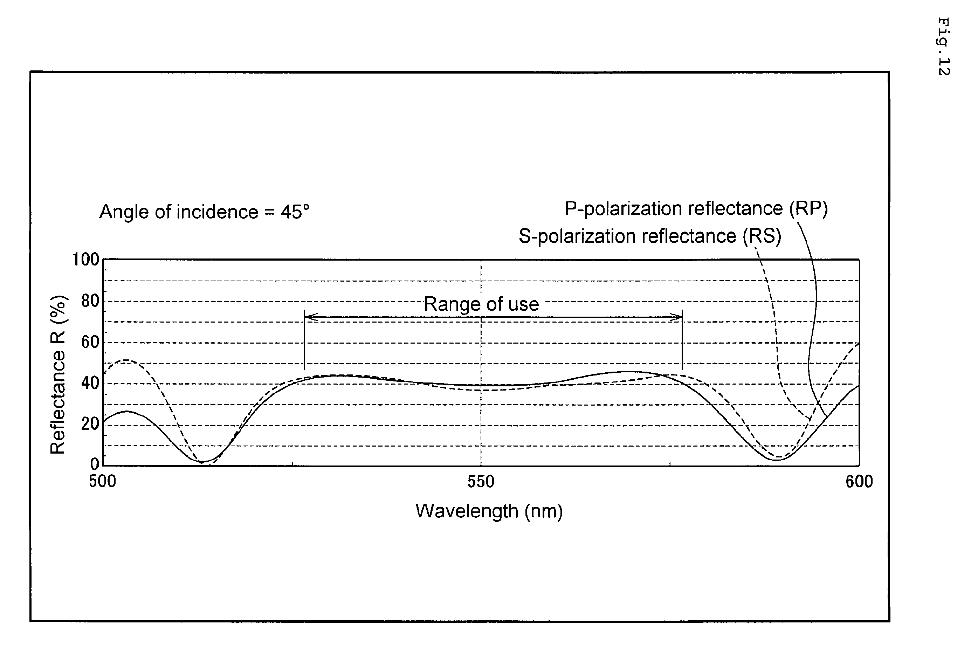

On the other hand, although the conventional non-polarizing plate beam splitter can be used in a point in which a S-polarization characteristic line and a P-polarization characteristic line cross or are close to each other, for example, as shown in the spectral characteristic figure in the case of an angle of incidence of 45° shown in Fig. 12, the conventional non-polarizing plate beam splitter has a problem that a usable wavelength band (525 nm - 575 nm) is very narrow (about 100 - 150 nm in a visible range or near-infrared range.) This is because the film used in the conventional non-polarizing plate beam splitter is an interference film, and therefore interference cannot be canceled in a wide range.

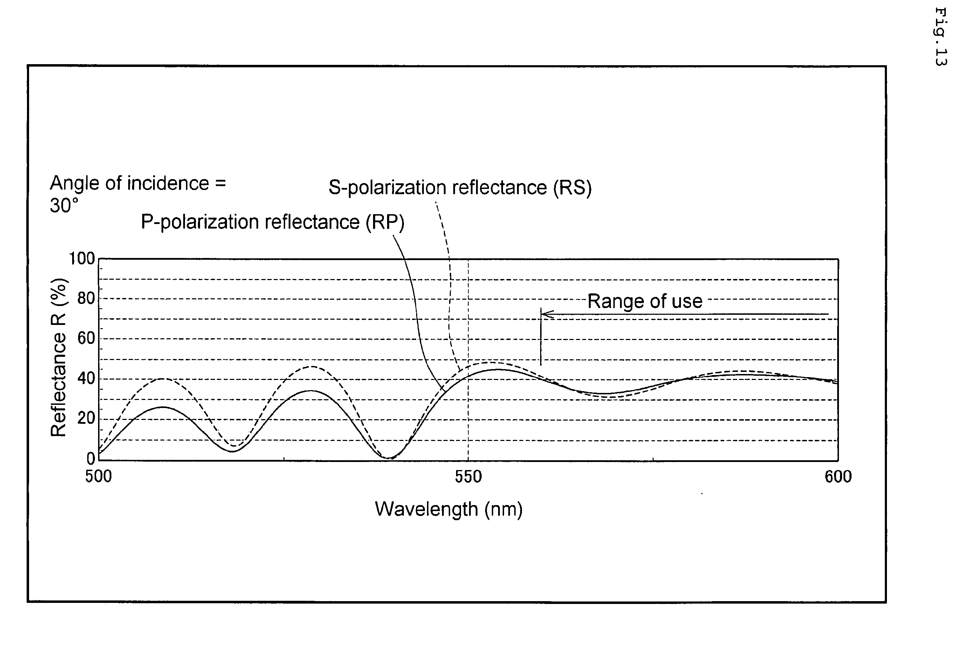

Moreover, since there is a great variation in spectral characteristics depending on an incidence angle as shown in a case of FIG. 13 in which the incidence angle is 30° (for example, a usable wavelength range is shifted from a case that the incidence angle is 45°, thus allowing a great variation to occur in reflectance), there is a problem that the usable range of the incidence angle is narrow. Moreover, since it is necessary to laminate and constitute dielectric films of plural layers (20 layers to 50 layers), there is also a problem of a high cost.

According to techniques of patent documents 2 and 3 which are the related arts of the reflecting mirror, disclosed therein are simply reflecting mirrors, and such reflecting mirrors cannot be used over a wide wavelength region, and cannot separate incident light into transmission /reflectance ratio 1:1 evenly.

This invention, in consideration of the above situations, is designed to provide the broadband non-polarizing plate beam splitter which can be used in the wide wavelength band, has little dependence to the angle of incidence, and can achieve increasing the yield and reducing the manufacturing cost by a small number of films.

**Solution to Problem**

Constitution to solve the above problems is as follows:

(1) A broadband non-polarizing plate beam splitter, which is a beam splitter for splitting a beam of light incident thereon, comprising:

a wavelength band expanding film;
a metallic film provided on the wavelength band expanding film; and
a non-polarizing film provided on the metallic film, on one main surface of a plate-shaped transparent glass substrate with both main surfaces optically polished,
wherein, when the light is incident on the beam splitter, the light is non-polarized by the non-polarizing film,
when the non-polarized light is incident on the metallic film, predetermined transmittance and reflectance are achieved, and
a band usable by the beam splitter in a wavelength of the light through the metallic film is expanded by the wavelength band expanding film.
(2)
In the above constitution (1),
the broadband non-polarizing plate beam splitter wherein thickness d of the non-polarizing film is defined by a following formula:

$$D = \Lambda/n$$

wherein $\Lambda$ is a value in range of $\lambda/8 \leq \Lambda \leq \lambda/3$,

n: refractive index of non-polarizing film, and

$\lambda$: wavelength of incident light.

(3)

In the above constitution (2),

the broadband non-polarizing plate beam splitter, wherein the $\Lambda$ is $\lambda/4$.

(4)

In the above constitution (1),

the broadband non-polarizing plate beam splitter, wherein

the wavelength band expanding film is formed as two layers including a dielectric film with low refractive index nL and a dielectric film with high refractive index nH (satisfying nH > nL),

the dielectric film with low refractive index nL is formed as a film of a first layer in order from the substrate toward an outermost surface side,

the dielectric film with high refractive index nH is formed as a film of a second layer on the film of the first layer,

a metallic film with a thickness for archiving a predetermined transmittance is formed on the wavelength band expanding film as a film of a third layer, and

a dielectric film having substantially the same low refractive index as the refractive index of the film of the first layer, is formed on the metallic film as a film of a fourth layer.

(5)

In the above constitution (4),

the broadband non-polarizing plate beam splitter, wherein refractive index nL of the dielectric film of the first layer with the low refractive index is smaller than refractive index nG of the transparent glass substrate, refractive index nH of the dielectric film of the second layer with the high refractive index is greater than refractive index nG of the transparent glass substrate, and refractive index nK of the metallic film of the third layer is greater than refractive index nH of the dielectric film of the second layer with the high refractive index.

(6)

In the above constitution (4) or (5),

the broadband non-polarizing plate beam splitter, wherein the first layer is made of $MgF_2$, the second layer is made of $HfO_2$, the third layer is made of Ag, and the fourth layer is made of $MgF_2$.

(7)

In any one of the above constitution (1) to (6),

the broadband non-polarizing plate beam splitter, wherein an antireflection film is formed on the other main surface of the transparent glass substrate.

(8)

In a beam splitter for splitting a beam of light incident thereon, a broadband non-polarizing plate beam splitter comprising,

a wavelength band expanding film;

a metallic film made of Ag and provided on the wavelength band expanding film; and

a non-polarizing film made of $MgF_2$ and provided on the metallic film, on one main surface of a plate-shaped transparent glass substrate with both main surfaces optically polished,

wherein the wavelength band expanding film is two layers consisting of a dielectric film made of $MgF_2$ with low refractive index nL and a dielectric film made of $HfO_2$ with high refractive index nH (satisfying nH > nL) and provided on the dielectric film made of $MgF_2$,

a refractive index of the non-polarizing film is substantially the same as or lower than the low refractive index nL of the dielectric film,

thickness d of the non-polarizing film is defined by a following formula:

$$D = \lambda/(4n);$$

wherein n is the refractive index of the non-polarizing film, and

$\lambda$ is a wavelength of an incident light.

**Advantageous Effects of Invention**

According to this invention, it is possible to provide the broadband non-polarizing plate beam splitter which can be used in a wide wavelength band, has less dependence on an angle of incidence, and can produce improvement in a yield and reduction of a manufacturing cost by a small number of films.

**Brief Description of Drawings**

[Fig. 1] Fig. 1 is a figure for explaining layer constitution of the broadband non-polarizing plate beam splitter in embodiments of this invention.

[Fig. 2] Fig. 2 is a schematic figure showing a relation among an incident light entering this beam splitter with angle of incidence θ, a reflected light, and a transmitted light.

[Fig. 3] Fig. 3 is a figure showing spectral characteristics when light is incident on the beam splitter of the embodiments with an angle of incidence of 45°.

[Fig. 4] Fig. 4 is a figure showing spectral characteristics when light is incident on the beam splitter of the embodiments with an angle of incidence of 0°.

[Fig. 5] Fig. 5 is a figure showing spectral characteristics when light is incident on the beam splitter of the embodiments with an angle of incidence of 30°.

[Fig. 6] Fig. 6 is a figure showing spectral characteristics when light is incident on the beam splitter of the embodiments with an angle of incidence of 50°.

[Fig. 7] Fig. 7 is a figure showing spectral characteristics when light is incident on the beam splitter of the embodiments with an angle of incidence of 60°.

[Fig. 8] Fig. 8 is a figure for explaining roles of the films of the third layer and the fourth layer in the beam splitter of the embodiments, and is a spectral-characteristic figure when forming only the metallic film on the transparent glass substrate.

[Fig. 9] Fig. 9 is a spectral characteristic figure when adding a low refractive index dielectric film ($MgF_2$) to the metallic film of Fig. 8.

[Fig. 10] Fig. 10 is a spectral characteristic figure when adding a hypothetical film having a theoretically optimal refractive index between the metallic film and the transparent glass substrate of Fig. 8.

[Fig. 11] Fig. 11 is a figure showing spectral characteristics of a conventional broadband non-polarizing cube beam splitter.

[Fig. 12] Fig. 12 is a figure showing spectral characteristics when light is incident on the conventional broadband non-polarizing plate beam splitter with an angle of incidence of 45°.

[Fig. 13] Fig. 13 is a figure showing spectral characteristics in a case of an angle of incidence of 30° in this beam splitter.

[Fig. 14] Fig. 14 is a spectral characteristic figure when adding the low refractive index dielectric film ($MgF_2$) to the metallic film of Fig. 8, and being nd = $\lambda/4$.

[Fig. 15] Fig. 15 is a spectral characteristic figure when adding the low refractive index dielectric film ($MgF_2$) to the metallic film of Fig. 8, and being nd = $\lambda/8$.

[Fig. 16] Fig. 16 is a spectral characteristic figure when adding the low refractive index dielectric film ($MgF_2$) to the metallic film of Fig. 8, and being nd = $\lambda/3$.

[Fig. 17] Fig. 17 is a spectral characteristic figure when adding a low refractive index dielectric film ($MgF_2$) to the metallic film of Fig. 8, and nd is less than $\lambda/8$.

[Fig. 18] Fig. 18 is a spectral characteristic figure when adding the low refractive index dielectric film ($MgF_2$) to the metallic film of Fig. 8, and nd is more than $\lambda/3$.

Description of Embodiments

These inventors first considered using either the cube-type or the plate-type as the non-polarizing beam splitter before arriving at this invention.

At the time of this consideration, it had already be avoided to use ZnS as a metallic film from an aspect of an environmental burden, and an alternative metallic film had been used. However, this alternative metallic film tended to have trouble in intensity.

In order to lose a chance to contact with an exterior in this alternative metallic film, the non-polarizing cube beam splitters were commonly used. This is because the alternative metallic film is confined to a bonding surface by bonding two rectangular prisms to each other in the cube type. Therefore, this is because the alternative metallic film did not contact the exterior, and the intensity of the alternative metallic film was not required so much.

However, as described above, in the non-polarizing cube beam splitter, there are many surfaces which should be coated, and a bonding step is additionally needed. Furthermore in this bonding step, considerable accuracy is needed in order to prevent film breakage and air bubbles from occurring.

Then, these inventors focused on not the cube type whose cost became high and yield was bad but the non-polarizing plate beam splitter which could be comparatively easily manufactured.

Conventionally, in the non-polarizing plate beam splitter, when the metallic film for non-polarizing was provided on a plate-shaped substrate, a film (overcoat) to protect the metallic film was provided with it covered. As this overcoat, MgF$_2$ etc. were used, for example.

These inventors considered details about the non-polarizing plate beam splitter including the overcoat. At the time, they considered constitution to concurrently solve the above problems, that is, "the problem that the beam splitter cannot respond to various angles of incidence" being the problem in the cube-type, and "the problem that a usable wavelength band is very narrow" being the main problem in the plate-type.

As a result, these inventors arrived at constitution in which the wavelength band expanding film, the metallic film, and the non-polarizing film were combined and provided on one main surface of a plate-shaped transparent glass substrate in order toward an outermost surface side.

That is, they arrived at the constitution in which the non-polarizing film was further set on the metallic film to bring a ratio of transmittance to reflectance close to 1 : 1 ratio, and the wavelength band expanding film was further provided under these films.

It was found that the above problems could be concurrently solved by this constitution, and furthermore improvement of yield and reduction of manufacturing cost were achieved by a small number of films.

<Embodiment 1>

Hereinafter, embodiments of this invention are explained.

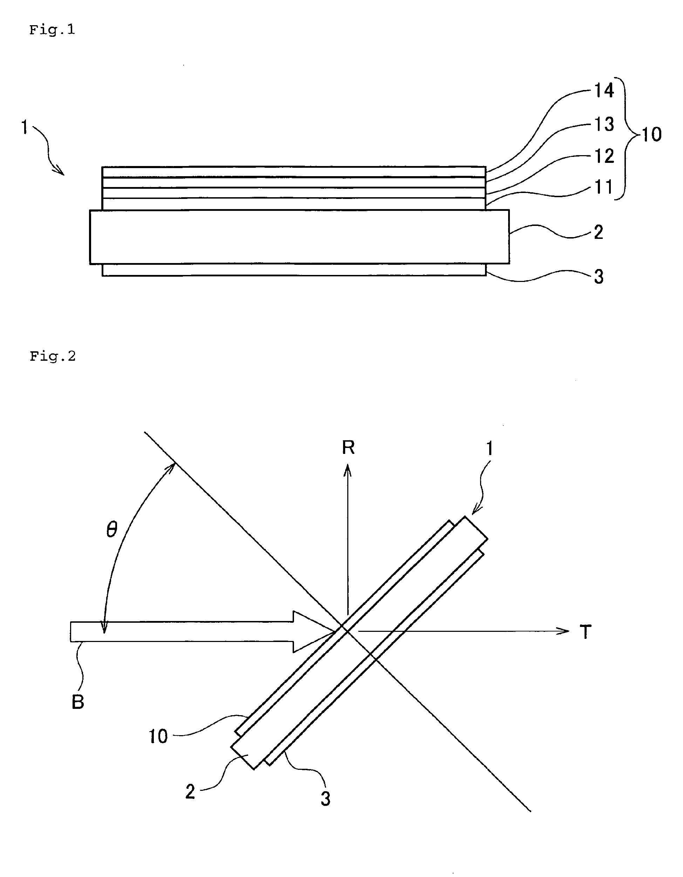

As for order, basic constitution of broadband non-polarizing plate beam splitter 1 (hereinafter, this may be merely called beam splitter 1), as shown in Fig. 1, is first explained in this embodiment.

Moreover, in <Embodiment 2>, modified embodiment is described focusing on relation of the refractive index of each film constituting beam splitter 1.

Furthermore, in <Embodiment 3>, modified embodiment is described focusing on a thickness of non-polarizing film 14.

Plate beam splitter 1 pertaining to the embodiment of this invention is explained in following order.

1. Entire constitution of beam splitter
2. Substrate
3. Non-polarizing hybrid film

    1) Wavelength band expanding film (the first layer, the second layer)
    2) Metallic film (the third layer)
    3) Non-polarizing film (the fourth layer)

And lastly effects by this embodiment are explained. Hereinafter, above each step is explained in order.

[1. Entire constitution of the beam splitter]

Broadband non-polarizing plate beam splitter 1 of this embodiment is a beam splitter to split a beam by inputting a light.

As for structure of beam splitter 1, as layer structure is typically shown in Fig. 1, non-polarizing hybrid film 10 is formed on one main surface of plate-shaped transparent glass substrate 2 with both main surfaces optically polished, and broadband antireflection film 3 (AR coat) to reduce influence of rear surface reflection is formed on the other main surface.

[2. Substrate]

Transparent glass suitable for an intended use, such as optical glass of BK7 etc., clear sheet glass, and silica glass, is used as transparent glass substrate 2.

[3. Non-polarizing hybrid film]

Next, non-polarizing hybrid film 10 used in this embodiment is explained. Non-polarizing hybrid film 10 in this embodiment consists of wavelength band expanding film 15 on one main surface of plate-shaped transparent glass substrate 2 with both main surfaces optically polished, metallic film 13 provided on wavelength band expanding film 15, and non-polarizing film 14 provided on metallic film 13.

To be more specific in functions, when light is incident on non-polarizing hybrid film 10 of the beam splitter, the light is non-polarized by non-polarizing film 14. When this non-polarized light is incident on metallic film 13, predetermined transmittance and reflectance are achieved. A band usable by the beam splitter in a wavelength of the light through metallic film 13 is expanded by wavelength band expanding film 15.

Wavelength band expanding film 15, metallic film 13, and non-polarizing film 14, i.e., non-polarizing hybrid film 10, come to be formed on substrate 2 so as to fulfill the above functions.

In addition, this term "band usable by the beam splitter in a wavelength of the light" is a wavelength band of light in condition in which polarization is canceled, and the ratio of transmittance to reflectance come close to the 1 : 1 ratio, that is, in condition in which there is little difference between P-polarization transmittance and S-polarization transmittance, and there is little difference between P-polarization reflectance and S-polarization reflectance.

A permissible amount of these differences in an actual product cannot be simply determined because the permissible amount varies depending on structure of the entire beam splitter. However, if showing an example, when each difference described above is a wavelength band in 10% or less (preferably 5% or less), the band can be regarded as usable by the beam splitter. Moreover, it is further preferable to add a condition that all rates are within $\pm 10\%$ of a level of 45% as the center to the above condition.

1) Wavelength band expanding film

In this embodiment, a film consisting of two layers constitutes wavelength band expanding film 15.

Specifically, wavelength band expanding film 15 is formed by combining low refractive index dielectric layer 11 of the first layer and high refractive index dielectric layer 12 of the second layer between metal layer 13 of the third layer and transparent glass substrate 2.

Thereby, it becomes possible to achieve uniform reflectance and transmission over a wide range of about visual light range (400 to 700 nm.) That is, the first layer and the second layer uniformize reflectance and transmittance over a wide wavelength band, therefore fill a role to expand a usable wavelength region as the non-polarizing beam splitter.

In addition, it is allowed to form a film which can expand a wavelength band with one layer, specifically a film of a single layer with a high refractive index (for example, n = 2.55), between the metallic film and the glass substrate.

According to this film, it is possible to realize non-polarizing hybrid film 10 with 3 layers structure consisting of the wavelength band expanding film, the metallic film, and the non-polarizing film (low refractive index dielectric film.)

On the other hand, there is difficult to form the film with the high refractive index of about n = 2.55. In view of "the improvement of yield and the reduction of manufacturing cost" which are one of the objects of this invention, it is preferable that wavelength band expanding film 15 is formed so as to have the two layers structure as above.

From an aspect of functions, a refractive index of high refractive index dielectric film 12 of the second layer is lower than n = 2.55 previously described. However, a low degree of refractive index can be compensated by supplementarily forming a film with the low refractive index (low refractive index dielectric film 11) as the first layer. That is, in order to mainly increase reflectance of light with a short wavelength, low refractive index dielectric film 11 of the first layer is provided.

Like this, taking into consideration the wavelength characteristics of films themselves, a role of film having great difficulty in actually being formed with one layer is fulfilled by combining low refractive index dielectric film 11 of the first layer and high refractive index dielectric film 12 of the second layer. Therefore, advantage in terms of cost (manufacturing time and material cost) or risk (vapor deposition conditions and a way of handling) can be acquired at a maximum.

For the above reason, in this embodiment, measures are taken so that a similar effect can be acquired by combination in the film of two layers.

As concrete composition of low refractive index dielectric film 11 (the first layer) in wavelength band expanding film 15, a well-known low refractive index dielectric film is allowed, for example, $MgF_2$, $SiO_2$, etc. are included.

Furthermore, when forming low refractive index dielectric film 11 of the first layer only at a calculated thickness, high refractive index dielectric film 12 is formed at a predetermined thickness as the second layer.

As concrete composition of this high refractive index dielectric film 12 (the second layer), for example, $Ti_2O_3$, $HfO_2$, $ZrO_2$, etc. are taken, and especially $HfO_2$ is preferable.

This is because, when using $HfO_2$, the wavelength band usable by the beam splitter is expanded to a longer wavelength and a shorter wavelength. Furthermore, although an absorbed amount of light in the metal layer (the third layer) composed of silver to be hereinafter described increases in a case of $Ti_2O_3$, there is also an advantage that the film can be formed without varying the absorbed amount of light in a case of $HfO_2$.

Moreover, as refractive indexes of low refractive index dielectric film 11 and high refractive index dielectric film 12 in wavelength band expanding film 15, refractive index nL of low refractive index dielectric film 11 of the first layer is set so as to be smaller than refractive index nG of transparent glass substrate 2, and refractive index nH of high refractive index dielectric film 12 of the second layer is set so as to be greater than refractive index nG of transparent glass substrate 2. As described hereinafter, this is in order to bring the ratio of transmittance to reflectance close to the 1 : 1 ratio.

In addition, thicknesses of low refractive index dielectric film 11 and high refractive index dielectric film 12 in wavelength band expanding film 15 are set so that a thickness of film fulfilling functions as the beam splitter can correspond to a half mirror (reflection : transmission = 1 : 1), as easily understood.

2) Metallic film

Metallic film 13 of the third layer is formed on above wavelength band expanding film 15, that is, on high refractive index dielectric film 12.

Au, AL, Ag, etc. can be used as metallic film 13 of the third layer. And this metallic film 13 is formed at a thickness to achieve predetermined transmittance. For example, in a case of the half mirror, it is allowed to set film thickness d = 20 nm (physical film thickness.)

In addition, although the case of the half mirror (reflection : transmission = 1 : 1) is described in this embodiment, even other cases except a relation between reflectance and transmittance satisfying 1 : 1 (for example, a case satisfying a relation of reflection : transmission = 2 : 1 or 1 : 4) can be arbitrarily changed by varying the thickness of metallic film 13. And then, such a beam splitter having an arbitrary relation between reflectance and transmittance can be manufactured according to an intention of a producer.

In addition, a reason for forming metallic film 13 in the third layer is because the metallic film has high reflectance, and it is easy to control vapor disposition, and further a wavelength range is wide and uniform.

Moreover, refractive index nK of metallic film 13 of the third layer to be hereinafter described is set so as to be greater than refractive index nH of high refractive index dielectric film 12 of the second layer.

3) Non-polarizing film

In this embodiment, when providing non-polarizing hybrid film 10 on transparent glass substrate 2, metallic film 13 is provided in the third layer as a main layer, and dielectric film 14 with a low refractive index for a purpose to adjust (non-polarize) polarization characteristics of metallic film 13 is provided as the fourth layer 14 at an upper side thereof.

A purpose for forming non-polarizing film 14 in the fourth layer is to make polarization characteristic of non-polarizing film 14 interfere with the polarization characteristics of metallic film 13 of the third layer to cancel the characteristics of each other, that is, it is possible to bring S-polarization and P-polarization close to each other by adding P-polarization reflectance and S-polarization reflectance of non-polarizing film 14 of an opposite phase to P-polarization reflectance and S-polarization reflectance of metallic film 13. Therefore, transmission characteristics and reflection characteristics of S-polarization and P-polarization can be adjusted to the almost same value respectively. That is, in each of transmission and reflection, it is possible to bring polarization components (S-polarization and P-polarization) close to each other, and non-polarizing beam splitter can be realized.

A well-known low refractive index dielectric film is allowed as concrete composition of non-polarizing film 14, for example, $MgF_2$, $SiO_2$, etc. are included just like the first layer (low refractive index dielectric film 11) of wavelength band expanding film 15, and $MgF_2$ is preferable.

A reason for selecting $MgF_2$ etc. like the first layer as a material of low refractive index dielectric film 14 of the fourth layer, is because there is less absorption under low temperature, and further they have sufficient hardness as an overcoat of metallic film 13 being heat-sensitive and sufficient adhesiveness to metallic film 13. In addition, increasing absorption by Ti system or $ZrO_2$ with a high refractive index and a range of use of an ultraviolet region are also taken into consideration.

A refractive index of non-polarizing film 14 is allowed to be substantially the same as or lower than a refractive index of low refractive index dielectric film 11 of the first layer.

Specifically, the sentence of "the refractive index being substantially the same as or lower than" in non-polarizing film 14 includes a case of the same refractive index as the film of the first layer, while, when the refractive index is low enough to adjust (non-polarize) the polarization characteristics of metallic film 13 as described above, the refractive index is allowed to be a refractive index higher than the film of the first layer, of course the refractive index is allowed to be a refractive index lower than the film of the first layer.

As for a thickness of non-polarizing film 14, non-polarizing film 14 is formed only with a thickness for achieving predetermined transmittance and reflectance.

In addition to an effect of non-polarization by providing $MgF_2$ film 14, since the number of films can be restricted to a minimum by including metallic film 13, the improvement of yield and the reduction of manufacturing cost can be achieved.

Furthermore, conventionally known effects also are acquired. That is, since metallic film 13 of the third layer with weak film strength is protected by non-polarizing film 14 of the fourth layer with strong film strength, a film strength required as the plate beam splitter can be guaranteed.

In addition, by adjusting thicknesses of metallic film 13 of the third layer and non-polarizing film 14 of the fourth layer, it is possible to change the spectrum ratio of transmission and reflection with the non-polarization maintained, and even when an angle of incidence varies, it is possible to minimize changes of spectral characteristics. For example, in a change of angle of incidence $\theta$ = 0° to $\pm 50°$, it is possible to control a variation of transmittance or reflectance within $\pm 10\%$.

[Effect of this embodiment]

According to the beam splitter of this embodiment described above, the following effects are achieved. There was the problem that the non-polarizing cube beam splitter cannot be attuned to various angles of incidence. Moreover, in the non-polarizing cube beam splitter, there were the problems that a failure rate increases, the yield deteriorates, and further the cost increases due to complexity of manufacturing steps.

On the other hand, in the non-polarizing plate beam splitter, there was the problem that the wavelength band in a point where the S-polarization characteristic line and the P-polarization characteristic line cross or are close to each other is very narrow. Furthermore, since it was necessary for dielectric films of many layers (20 layers to 50 layers) to be laminated and constituted, there was also the problem of high cost.

It is features of this embodiment to further set non-polarizing film 14 on metallic film 13 for the non-polarization under such a situation and to provide wavelength band expanding film 15 under these films contributing to the non-polarization.

According to this embodiment as above, it becomes possible to use it in a wide wavelength band and to decrease dependence on the angle of incidence, and moreover to improve the yield and to reduce the manufacturing cost due to the fact that the number of films is low.

If describing concrete things regarding the above effects, it is possible to reduce the manufacturing cost to about 1/5 of the conventional cube beam splitter, or to about 1/2 of the conventional plate beam splitter.

<Embodiment 2>

Non-polarizing hybrid film 10 in embodiment 1 is constituted as below, from an aspect of the refractive index. Hereinafter, parts not specifically described are the same as <Embodiment 1.>

On one main surface of substrate 2, dielectric film 11 with low refractive index nL is formed as the film of the first layer.
Dielectric film 12 with high refractive index nH (satisfying nH > nL) is formed as the film of the second layer on the film of the first layer.
Metallic film 13 with a thickness to achieve a predetermined transmittance is formed on the film of the second layer as the third layer.
A dielectric film with a low refractive index substantially the same as the refractive index of the film of the first layer is former on the film of the third layer as the film of the fourth layer.

As an example, a beam splitter having following structure is included (n: refractive index, d: thickness.)

| | | |
|---|---|---|
| Transparent glass substrate | n = 1.52 | |
| The first layer $MgF_2$ | n = 1.38 | d = 100 nm |
| The second layer $HfO_2$ | n = 1.95 | d = 80 nm |
| The third layer Ag | n = 3.34 | d = 20 nm |
| The fourth layer $MgF_2$ | n = 1.38 | d = 80 nm |
| Air | n = 1.00 | |

Even though being the plate beam splitter of four layers structure having such a relation of the refractive indexes, the plate beam splitter can be used in a wide wavelength band and has little dependence on an angle of incidence, and can achieve improving the yield and reducing the manufacturing cost by a small number of films.

Moreover, it is preferable that refractive index nL of the dielectric film of the first layer with the low refractive index is smaller than refractive index nG of the transparent glass substrate, refractive index nH of the dielectric film of the second layer with the high refractive index is greater than refractive index nG of the transparent glass substrate, and refractive index nK of the metallic film of the third layer is greater than refractive index nH of the dielectric film of the second layer with the high refractive index.

According to satisfying such a relation of the refractive indexes, following effects are similarly acquired by following functions.
First, light is incident on non-polarizing film 14 (the fourth layer.)
And the light is incident on metallic film 13 (the third layer.) On this occasion, since the refractive index is higher than the refractive index of non-polarizing film 14 (the fourth layer), unnecessary reflection in metallic film 13 (the third layer) is reducible.
And the light is incident on high refractive index dielectric film 12 (the second layer) in wavelength band expanding film 15. At this time, metallic film 13 (the third layer) has a higher refractive index. Furthermore, this high refractive index dielectric film 12 (the second layer) has the refractive index higher than low refractive index dielectric film 11 (the first layer.)

That is, although a ratio of transmittance to reflectance is usually set to 1 : 1 by alternately providing layers with a magnitude relation of the refractive indexes, this magnitude relation concentrates in the first layer to the third layer in this embodiment.

Therefore, it is not necessary to form a film with a high refractive index (for example, n = 2.55) by force, and it is possible to reduce the manufacturing cost. Moreover, with regard to the number of films, it is enough to provide two sheets of wavelength band expanding films 15 in a case of this embodiment, and it is possible to improve the yield by a small number of films.

<Embodiment 3>

In non-polarizing hybrid film 10 in embodiment 1, from an aspect of a film thickness, non-polarizing film 14 is constituted as follows:

$$D = \Lambda/n$$

However, the $\Lambda$ is a value within a range of $\lambda/8 \leq \Lambda \leq \lambda/3$.
d: Thickness of non-polarizing film
n: Refractive index of non-polarizing film
$\lambda$: Wave length of incident light

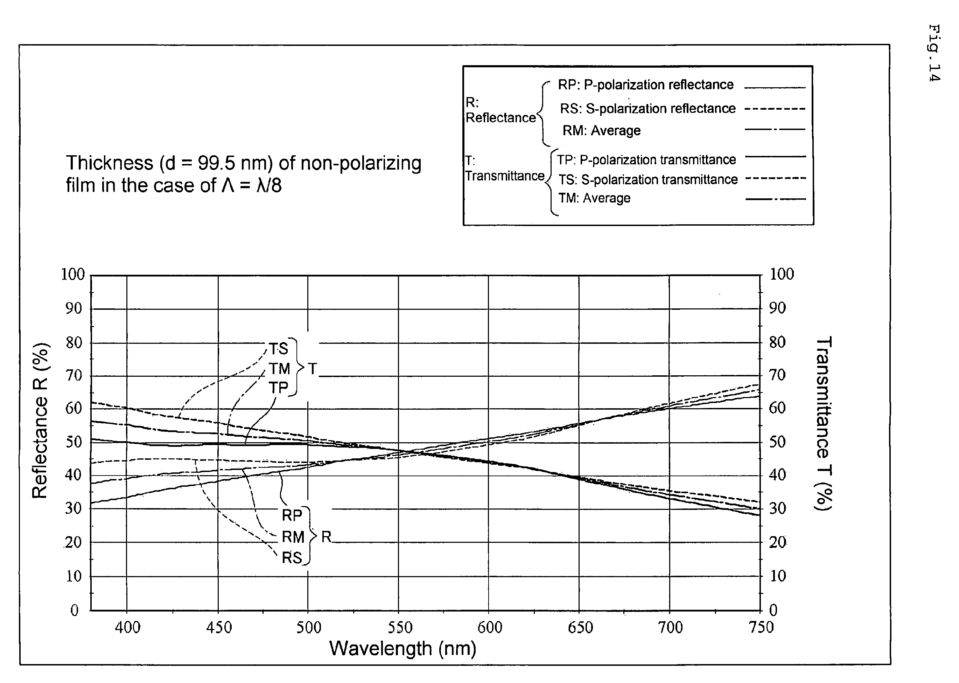

The above numerical range is explained using Figs. 14 to 16.

Fig. 14 shows spectral characteristics in a case where a low refractive index dielectric film ($MgF_2$ film: film thickness d = 80 nm) is added on this metallic film (Ag film), and nd = $\lambda/4$ within the above numerical range is satisfied. Like this, by only setting the thickness of the low refractive index dielectric film on the metallic film to $\lambda/(4n)$, it is possible to bring not only polarization components (P-polarization and S-polarization) but also reflectance and transmittance close to each other.

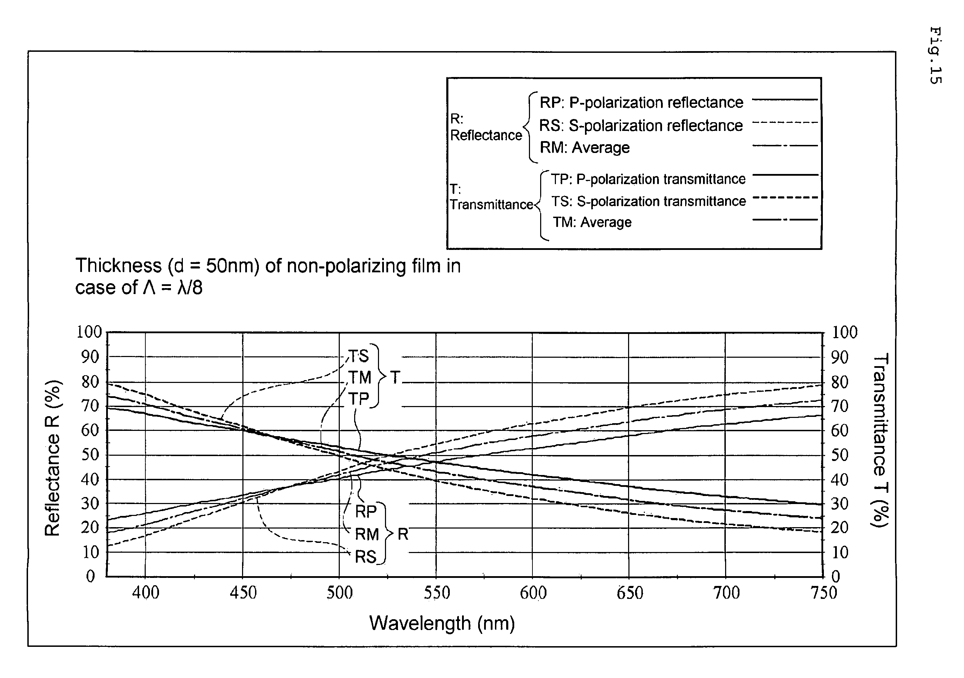

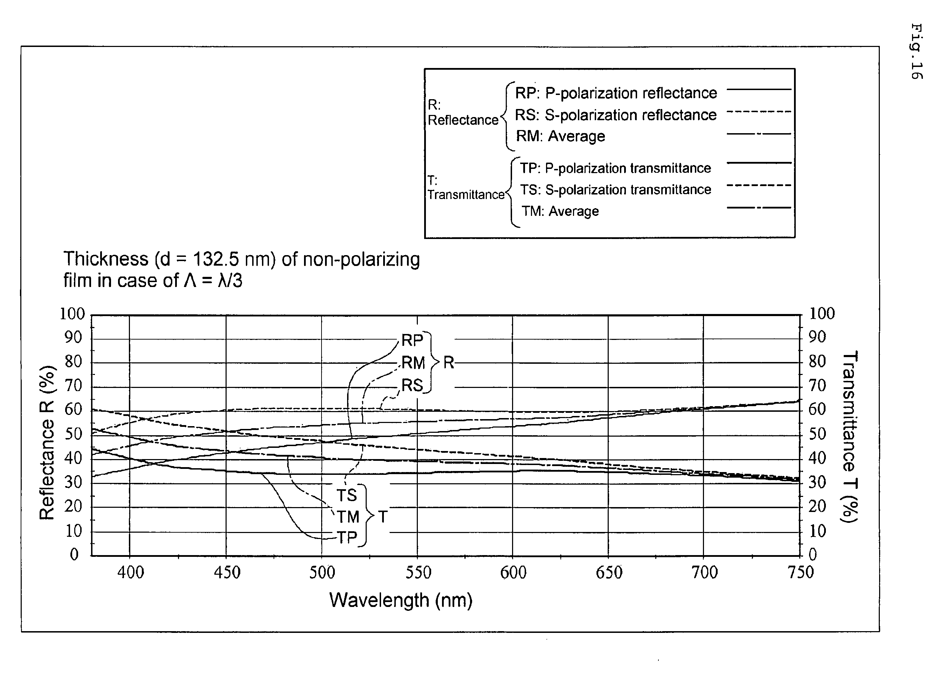

Moreover, a case where nd = $\lambda/8$ is satisfied is shown in Fig. 15, and a case where nd = $\lambda/3$ is satisfied is shown in Fig. 16. Also in this case, it is possible to bring not only the polarization components (P-polarization and S-polarization) but also reflectance and transmittance close to each other.

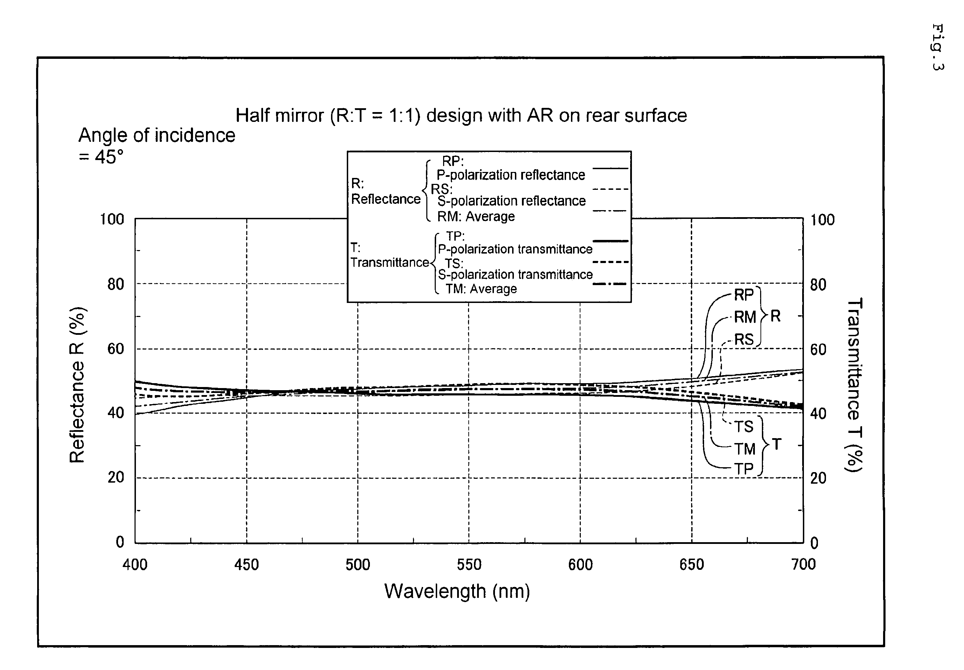

In addition, examples where wavelength band expanding film 15 is not provided are described in Fig. 14 to Fig. 16. When wavelength band expanding film 15 is provided, as shown in Fig. 3 to be explained in Examples, it is possible to bring the ratio of reflectance to transmittance close to 1 : 1 without limit, further it is possible to cancel the polarization, and in addition, it is possible to widely secure a wavelength region satisfying the above conditions.

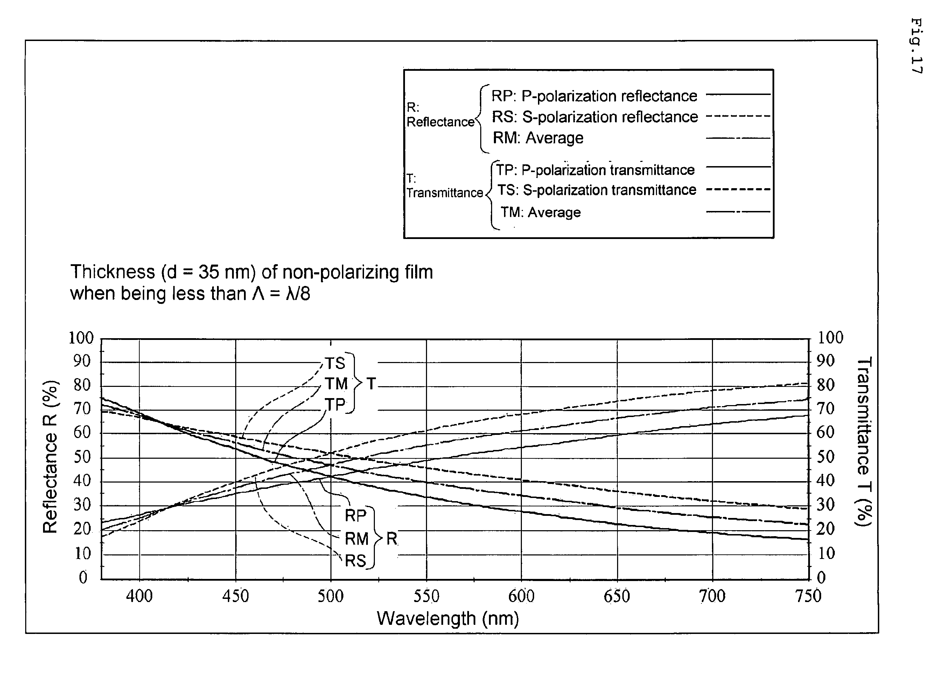

On the other hand, a case where nd is less than $\lambda/8$, which is out of the above numerical range, is shown in Fig. 17. In this case, although the polarization components can be comparatively brought close to each other, reflectance and transmittance are widely separated from each other.

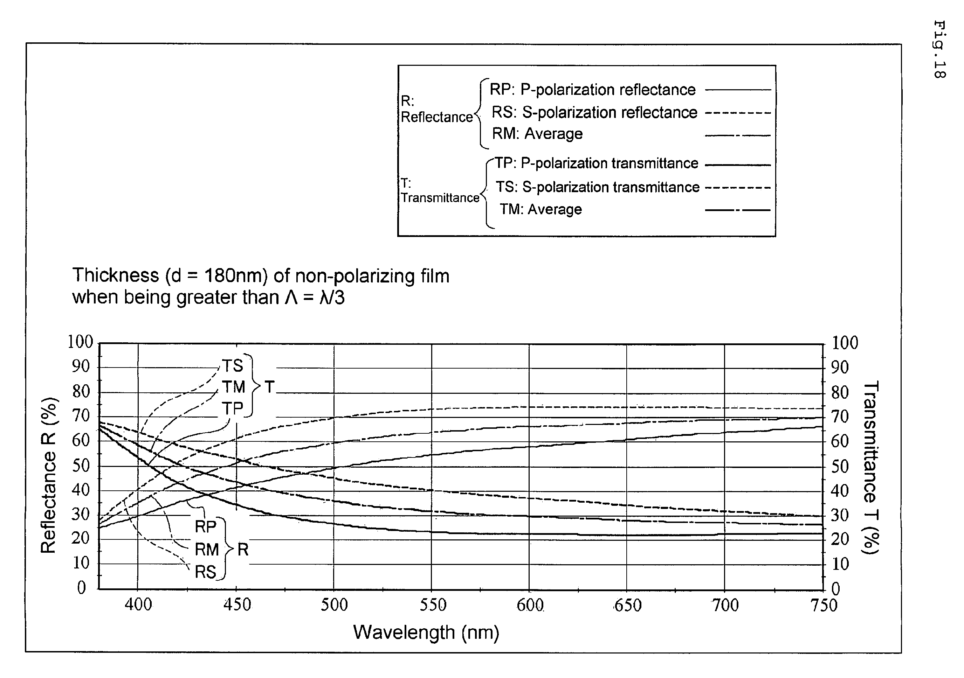

On the other hand, a case where nd is a value beyond $\lambda/3$, which is similarly out of the above numerical range, is shown in Fig. 18. In this case, contrary to the case where nd is less than $\lambda/8$, although reflectance and transmittance can be comparatively brought close to each other, polarization components are widely separated from each other.

Moreover, generally, in a case of angle of incidence $\theta = 45°$, when a thickness of non-polarizing film 14 is $\lambda/(2n)$, phases of wavelength of an incident light and a reflected light are completely reversed, and therefore non-polarizing film 14 is expected to contribute to non-polarization. On the contrary, when the thickness of non-polarizing film 14 is $\lambda/(4n)$, it is expected that phases of wavelength of the incident light and the reflected light overlap, and polarization becomes intense.

However, in this embodiment, completely contrary to this expectation that the polarization becomes intense, just when the thickness of non-polarizing film 14 is $\lambda/(4n)$, effects of the non-polarization are maximized. In addition, the ratio of transmittance to the reflectance also can be brought closest to 1 : 1, compared with the cases of other thickness.

However, in a case of only non-polarizing film 14 and metallic film 13, a wavelength region where the ratio of transmittance to reflectance are 1 : 1 is not so wide. Therefore, wavelength band expanding film 15 as above is formed. Thereby, it is possible to use the beam splitter in a wide wavelength band, and dependence on the angle of incidence becomes smaller.

Thus, it is preferable that $\Lambda$ is a value within the range of $\lambda/8 \leq \Lambda \leq \lambda/3$, and especially it is most preferable that $\Lambda$ is $\lambda/4$, unlike conventional common knowledge.

**Example**

Next, this invention is concretely explained showing an example. Of course, this invention is not limited to the following example.

In this example, beam splitter 1 with refractive index n and thickness d described above was produced (these are already described above, but described again.)

| | | |
|---|---|---|
| Transparent glass substrate | n = 1.52 | |
| The first layer MgF$_2$ | n = 1.38 | d = 100 nm |
| The second layer HfO$_2$ | n = 1.95 | d = 80 nm |
| The third layer Ag | n = 3.34 | d = 20 nm |
| The fourth layer MgF$_2$ | n = 1.38 | d = 80 nm |
| Air | n = 1.00 | |

In addition, it is enough to use a well-known method in order to form a film, for example, a vacuum deposition method or a sputtering method is included. In a case of the vacuum deposition method, any condition is allowed as long as substances described in this description are formed into a film at a predetermined thickness, and for example, a pressure inside a vacuum deposition equipment is set at $2 \times 10^{-5}$ to $5 \times 10^{-5}$ Torr and a substrate temperature is set at 300 to 350°C.

When using this beam splitter 1, as shown in Fig. 2, incident light B is incident on a surface formed by non-polarizing hybrid film 10. Then, the light is split into reflected light R and transmitted light T depending on angle of incidence θ.

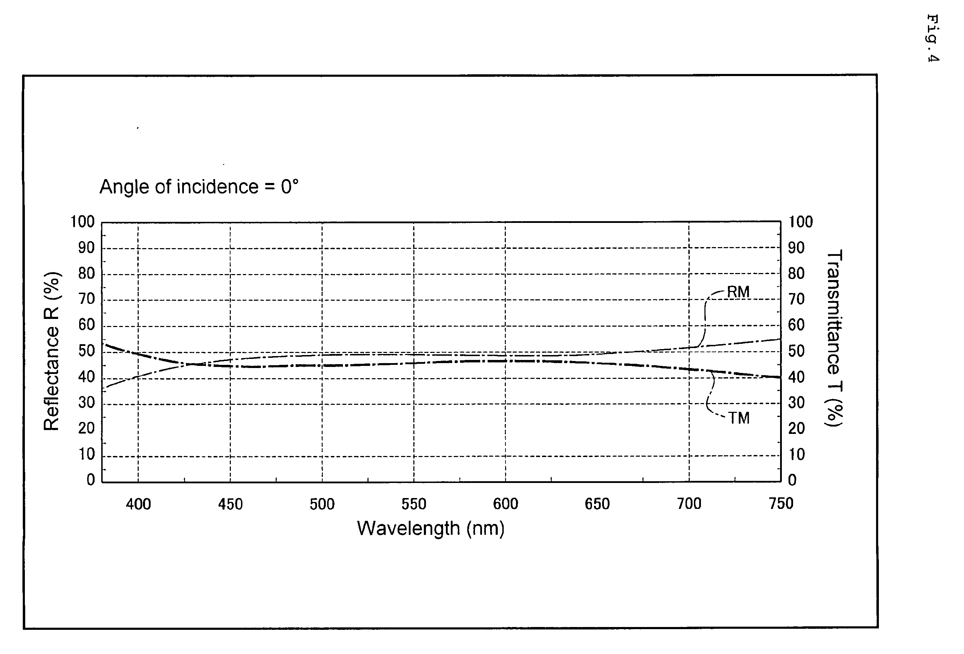

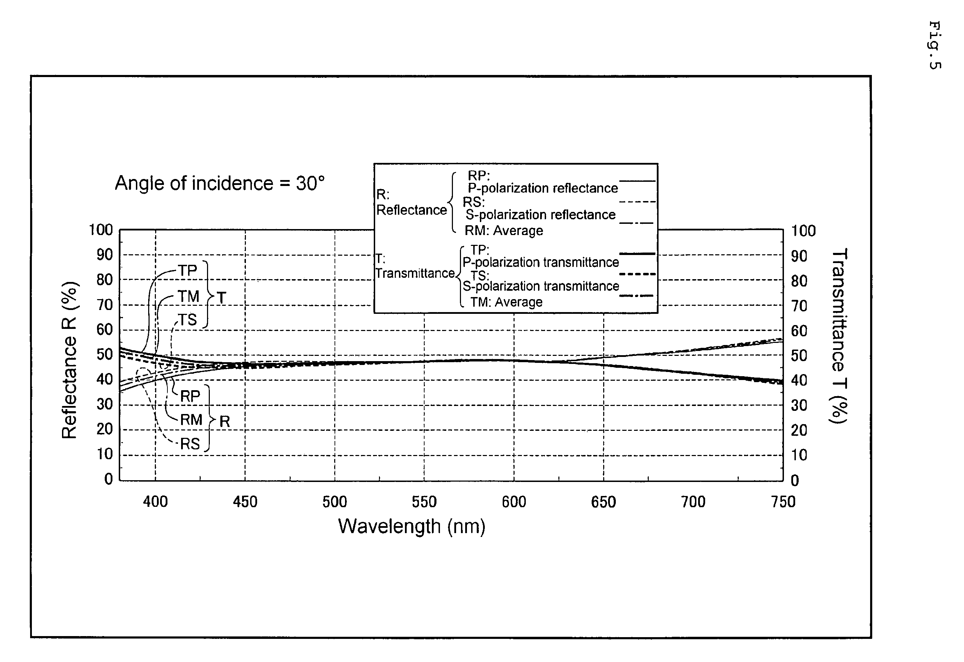

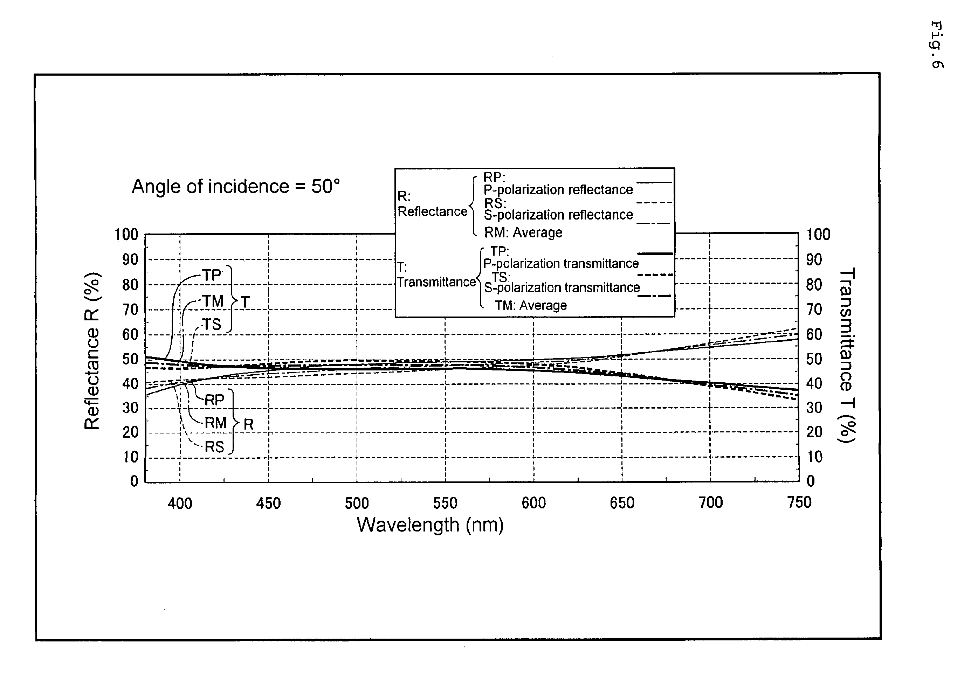

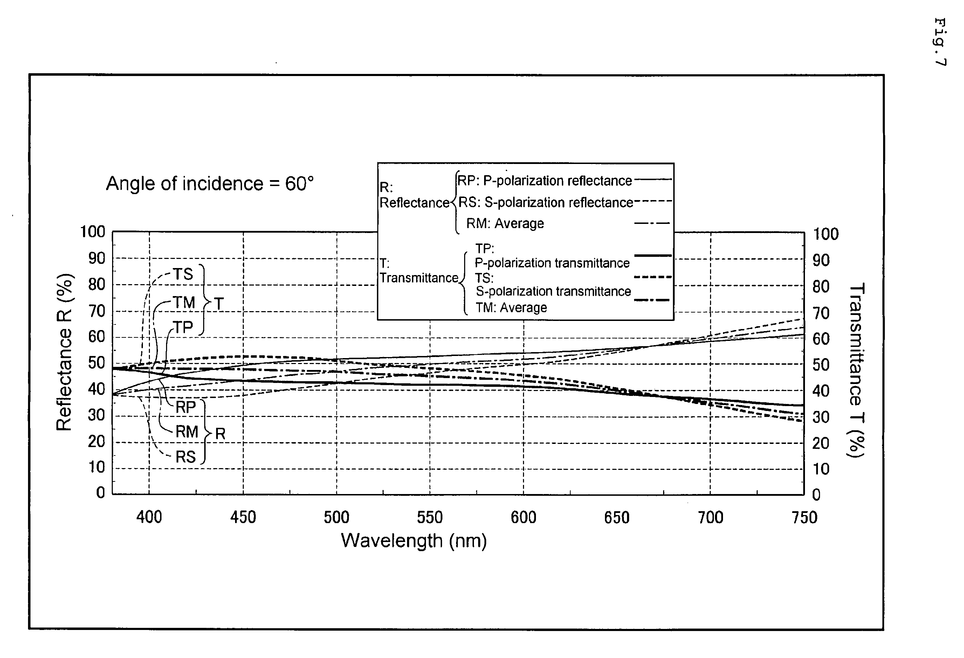

Fig. 3 shows spectral characteristics in a case of angle of incidence θ = 45°. In this figure, R signifies reflectance, RP signifies P-polarization reflectance, RS signifies S-polarization reflectance, RM signifies average reflectance, T signifies transmittance, TP signifies P-polarization transmittance, TS signifies S-polarization transmittance, and TM signifies average transmittance. Hereinafter, the same is true on Figs. 4 to 9.

As shown in this Fig. 3, a S-polarization characteristic line and a P-polarization characteristic line are close to each other in a range of wavelength 400 nm to 700 nm, everything converges within± 10% with a focus on a level of 45%, and specifically also from a viewpoint of uniformity, good data is shown in 450 nm to 650 nm.

Moreover, when focusing on spectral characteristics by the angle of incidence, as shown in Fig. 4 to Fig. 7, it turns out that there is almost no change in 0° to nearly 50°. In addition, since there is no polarization in a case of θ = 0° in Fig. 4, only an average has been shown.

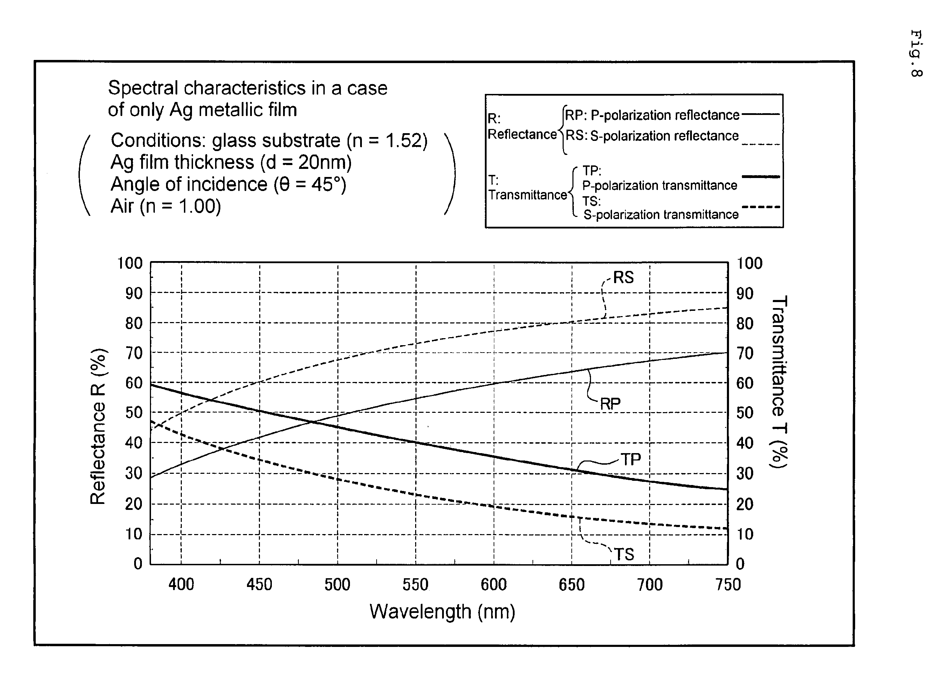

Fig. 8 shows spectral characteristics when the angle of incidence is θ = 45° in a case that only a metallic film (Ag film: film thickness d = 20 nm) is formed on the transparent glass substrate (refractive index n = 1.52). In this figure, RP is a characteristic line of P-polarization reflectance, RS is a characteristic line of S-polarization reflectance, TP is a characteristic line of P-polarization transmittance, and TS is a characteristic line of S-polarization transmittance.

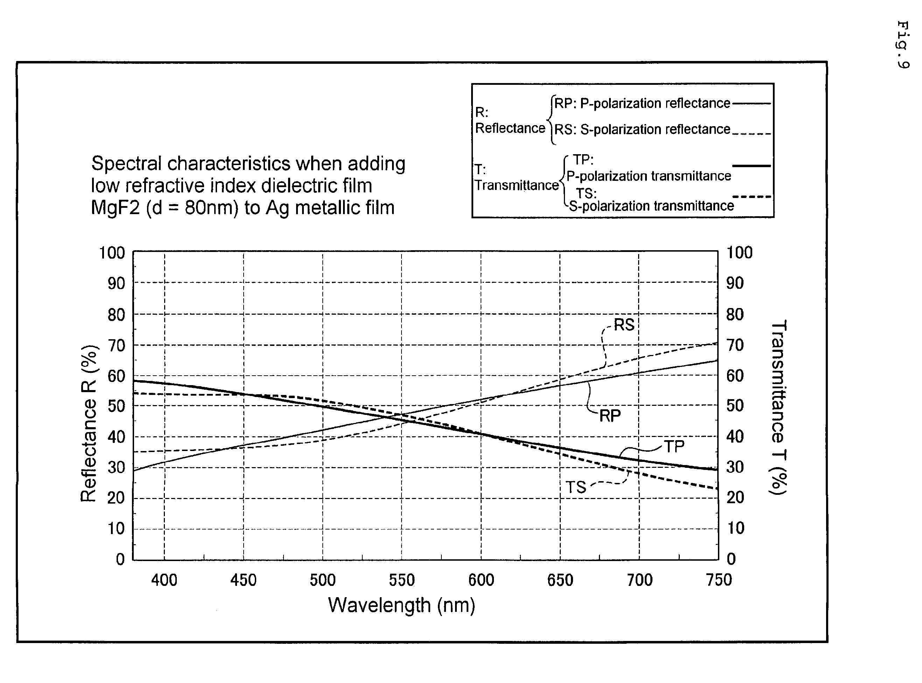

Fig. 9 shows spectral characteristics in a case that a low refractive index dielectric film (MgF$_2$ film: film thickness d = 80 nm) is added on this metallic film (Ag film.) Like this, polarization components (P-polarization and S-polarization) can be brought close to each other by forming the low refractive index dielectric film on the metallic film.

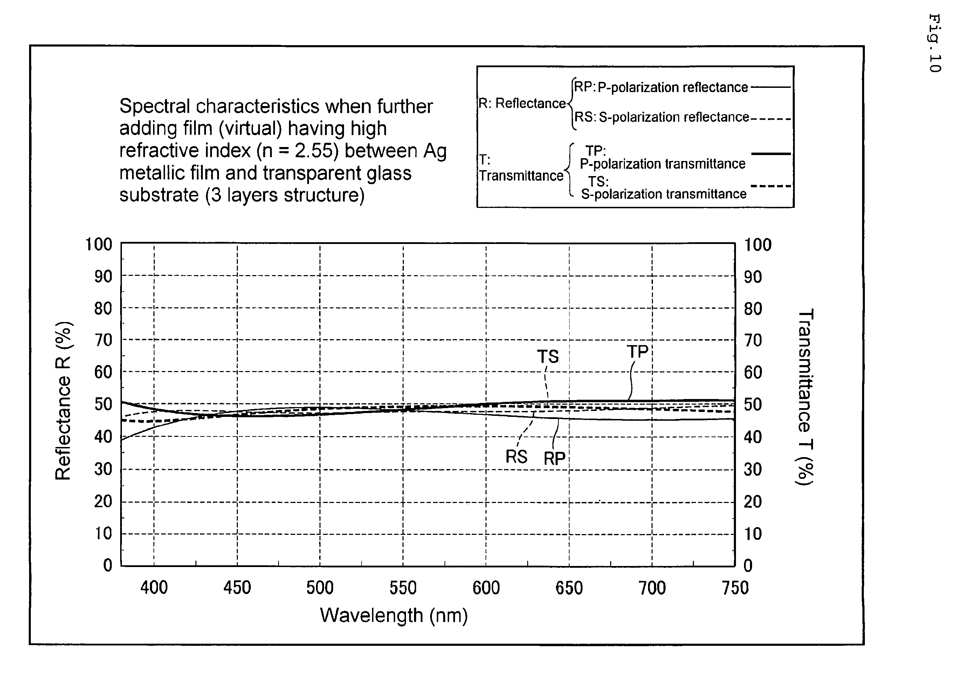

Next, Fig. 10 shows spectral characteristics in a case that a film with a high refractive index (n = 2.55) is provided between the metallic film and the transparent glass substrate in Fig. 8, however conditions and a thickness are changed. In this case, according to a function by providing the virtual high refractive index film (n = 2.55), the wavelength characteristics can become flat, and it is possible to constitute the non-polarizing beam splitter in a wide wavelength region.

It turns out from these results that, in a range of angle of incidence 0°±50°, there are less changes of reflectance and transmittance ratio, and moreover a P-polarization characteristic line and a S-polarization characteristic line are close to each other. That is, even though the angle of incidence is changed, there are less changes in transmittance and reflectance (within S/P = 5%), and therefore it can be said that the beam splitter has capability necessary for what is not intended to change an amount of light in the range and what is not intended to be subject to influence of the polarization components.

**Reference Signs List**

1

1    Beam splitter

2    Transparent glass substrate

10    Non-polarizing hybrid film

11    Low refractive index dielectric film

12     High refractive index dielectric film

13     Metallic film

14     Non-polarizing film (Low refractive index dielectric film)

15     Wavelength band expanding film

**Claims**

1.  A broadband non-polarizing plate beam splitter, which is a beam splitter for splitting a beam of light incident thereon, comprising:

     a wavelength band expanding film;
     a metallic film provided on the wavelength band expanding film; and
     a non-polarizing film provided on the metallic film, on one main surface of a plate shaped transparent glass substrate with both main surfaces optically polished,
     wherein, when the light is incident on the beam splitter, the light is non-polarized by the non-polarizing film,
     when the non-polarized light is incident on the metallic film, predetermined transmittance and reflectance are achieved, and
     a band usable by the beam splitter in a wavelength of the light through the metallic film is expanded by the wavelength band expanding film.

2.  The broadband non-polarizing plate beam splitter according to claim 1, wherein thickness d of the non-polarizing film is defined by a following formula,

$$D = \Lambda/n,$$

Wherein $\Lambda$ is a value in a range of $\lambda/8 \leq \Lambda \leq \lambda/3$,
n is a refractive index of the non-polarizing film, and
$\lambda$ is a wavelength of a incident light.

3.  The broadband non-polarizing plate beam splitter according to claim 2, wherein the $\Lambda$ is $\lambda/4$.

4.  The broadband non-polarizing plate beam splitter according to any one of claims 1 to 3, wherein the wavelength band expanding film is formed as a two-layer film including a dielectric film with low refractive index nL and a dielectric film with high refractive index nH (satisfying nH > nL),
     the dielectric film with low refractive index nL is formed as a film of a first layer in order from the substrate toward an outermost surface side, the dielectric film with high refractive index nH is formed as a film of a second layer on the film of the first layer,
     the metallic film with a thickness for achieving predetermined transmittance is formed on the wavelength band expanding film as a film of a third layer, and
     a dielectric film having substantially the same low refractive index as the refractive index of the film of the first layer, is formed on the metallic film as a film of a fourth layer.

5.  The broadband non-polarizing plate beam splitter according to claim 4, wherein the refractive index nL of the dielectric film of the first layer with the low refractive index, is smaller than refractive index nG of the transparent glass substrate, the refractive index nH of the dielectric film of the second layer with the high refractive index is greater than the refractive index nG of the transparent glass substrate, and refractive index nK of the metallic film of the third layer is greater than the refractive index nH of the dielectric film of the second layer with the high refractive index.

6.  The broadband non-polarizing plate beam splitter according to claim 4 or 5, wherein the first layer is made of $MgF_2$, the second layer is made of $HfO_2$, the third layer is made of Ag, and the fourth layer is made of $MgF_2$.

7.  The broadband non-polarizing plate beam splitter according to any one of claims 1 to 6, wherein an antireflection film is formed on the other main surface of the transparent glass substrate.

8. A broadband non-polarizing plate beam splitter, which is a beam splitter for splitting a beam of light incident thereon, comprising:

a wavelength band expanding film;
a metallic film made of Ag and provided on the wavelength band expanding film; and
a non-polarizing film made of $MgF_2$ and provided on the metallic film, on one main surface of a plate-shaped transparent glass substrate with both main surfaces optically polished,
wherein the wavelength band expanding film is two layers consisting of a dielectric film made of $MgF_2$ with low refractive index nL and a dielectric film made of $HfO_2$ with high refractive index nH (satisfying nH > nL) and provided on the dielectric film made of $MgF_2$,
a refractive index of the non-polarizing film is substantially the same as or lower than the low refractive index nL of the dielectric film, and
thickness d of the non-polarizing film is defined by a following formula:

$$D = \lambda/(4n),$$

wherein n is the refractive index of the non-polarizing film, and
$\lambda$ is a wavelength of an incident light.

Fig.1

Fig.2

Fig.3

Fig.4

Fig.5

Fig. 6

EP 2 520 955 A1

Fig. 6

Fig.7

Fig.8

Spectral characteristics in a case
of only Ag metallic film

Conditions: glass substrate (n = 1.52)
Ag film thickness (d = 20nm)
Angle of incidence (θ = 45°)
Air (n = 1.00)

R:
Reflectance { RP: P-polarization reflectance ———
               RS: S-polarization reflectance ----

T:
Transmittance { TP:
                 P-polarization transmittance ———
                 TS:
                 S-polarization transmittance ----

Fig.9

Spectral characteristics when adding low refractive index dielectric film MgF2 (d = 80nm) to Ag metallic film

Fig.10

Spectral characteristics when further adding film (virtual) having high refractive index (n = 2.55) between Ag metallic film and transparent glass substrate (3 layers structure)

Legend:
R: Reflectance { RP: P-polarization reflectance —— ; RS: S-polarization reflectance ------ }
T: Transmittance { TP: P-polarization transmittance —·—·— ; TS: S-polarization transmittance —··—·· }

X-axis: Wavelength (nm)
Left Y-axis: Reflectance R (%)
Right Y-axis: Transmittance T (%)

Fig.11

Spectrum transmittance characteristics in cube-type (angle of incidence = 0°)

P-polarization transmittance (TP)
S-polarization transmittance (TS)

Transmittance T (%)

Wavelength (nm)

Fig.12

EP 2 520 955 A1

Angle of incidence = 45°

P-polarization reflectance (RP)
S-polarization reflectance (RS)

Range of use

Reflectance R (%)

Wavelength (nm)

Fig.13

Fig. 14

EP 2 520 955 A1

Thickness (d = 99.5 nm) of non-polarizing
film in the case of Λ = λ/8

| R:<br>Reflectance | RP: P-polarization reflectance | ———— |
| | RS: S-polarization reflectance | ---------- |
| | RM: Average | —— — —— |
| T:<br>Transmittance | TP: P-polarization transmittance | ———————— |
| | TS: S-polarization transmittance | ---------- |
| | TM: Average | —— ·· —— |

Fig.15

Thickness (d = 50nm) of non-polarizing film in case of Λ = λ/8

Fig.16

Thickness (d = 132.5 nm) of non-polarizing film in case of $\Lambda = \lambda/3$

Fig. 17

EP 2 520 955 A1

| R:<br>Reflectance | RP: P-polarization reflectance ———— |
|---|---|
| | RS: S-polarization reflectance ———— |
| | RM: Average ———·—— |
| T:<br>Transmittance | TP: P-polarization transmittance ———— |
| | TS: S-polarization transmittance ———— |
| | TM: Average ———··—— |

Thickness (d = 35 nm) of non-polarizing film
when being less than Λ = λ/8

Fig.18

EP 2 520 955 A1

| R:<br>Reflectance | RP: P-polarization reflectance ——————— |
| | RS: S-polarization reflectance  - - - - - - - |
| | RM: Average ——— · ——— |
| T:<br>Transmittance | TP: P-polarization transmittance ——————— |
| | TS: S-polarization transmittance  - - - - - - - |
| | TM: Average ——— · ——— |

Thickness (d = 180nm) of non-polarizing film
when being greater than $\Lambda = \lambda/3$

**INTERNATIONAL SEARCH REPORT**

| International application No. |
| --- |
| PCT/JP2010/065161 |

A. CLASSIFICATION OF SUBJECT MATTER
*G02B5/08*(2006.01)i, *B32B7/02*(2006.01)i, *B32B9/00*(2006.01)i, *B32B15/04* (2006.01)i, *B32B17/06*(2006.01)i

According to International Patent Classification (IPC) or to both national classification and IPC

B. FIELDS SEARCHED

Minimum documentation searched (classification system followed by classification symbols)
G02B5/08, B32B7/02, B32B9/00, B32B15/04, B32B17/06

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 6-317703 A (FDK Corp.), 15 November 1994 (15.11.1994), paragraph [0024]; fig. 7 (Family: none) | 1-8 |
| Y | JP 2-020801 A (Matsushita Electric Industrial Co., Ltd.), 24 January 1990 (24.01.1990), claims; page 1, right column, lines 7 to 10; page 2, lower left column, line 1 (Family: none) | 1-8 |
| Y | JP 60-028603 A (Minolta Camera Co., Ltd.), 13 February 1985 (13.02.1985), claims (Family: none) | 1-8 |

☒ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 November, 2010 (09.11.10) | 22 November, 2010 (22.11.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/065161

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 60-064304 A　(Nitto Optical Co., Ltd.),<br>12 April 1985 (12.04.1985),<br>claims<br>(Family: none) | 1-8 |
| Y | JP 2007-133375 A　(Konica Minolta Opto, Inc.),<br>31 May 2007 (31.05.2007),<br>claims 1, 4; paragraph [0017]<br>& US 2007/0086092 A1 | 4-8 |
| Y | JP 5-142499 A　(Sekinos Co., Ltd.),<br>11 June 1993 (11.06.1993),<br>claim 2<br>(Family: none) | 4-8 |
| Y | JP 2002-071946 A　(Nippon Sheet Glass Co., Ltd.),<br>12 March 2002 (12.03.2002),<br>paragraphs [0013] to [0016]<br>& US 2002/0024731 A1　　& US 2005/0041291 A1<br>& EP 1184687 A2　　　　& CA 2355991 A | 4-8 |

Form PCT/ISA/210 (continuation of second sheet) (July 2009)

**EP 2 520 955 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63008702 A
- JP 9043408 A
- JP 5297207 A

**Non-patent literature cited in the description**

- Optical Thin Film. Issuer Nikkan Kogyo Shimbun, LTD, 30 November 1989